# EUROPEAN PATENT APPLICATION

(11) **EP 2 945 007 A1**
(43) Date of publication of application: **18.11.2015**
(21) Application number: 15167229.2
(22) Date of filing: 11.05.2015
(51) Int. Cl.: G02C 5/00, G02C 5/22, G02C 1/08

(54) **SPECTACLE FRAME WITH SPLIT RIMS WITH NUT HAVING INNER AND OUTER THREADS**

(30) Priority: 12.05.2014 CN 201420242229 U
(71) Applicant: Kingvisions Limited, Sha Tin (HK)
(72) Inventor: Chan, Hiu Tung, Hong Kong (HK)
(74) Representative: Casalonga

(57) **Abstract**

The present invention discloses a spectacle frame comprising a frame body and a pair of spectacle legs, in which two pile heads of the frame body are divided to obtain two parts at the end of the frame body. The spectacle frame also comprises a first assembling hole disposed on each pile head of the end of the spectacle frame; a first fixing hole disposed on each pile head of the end of the spectacle frame which is cross-configuration with the first assembling hole; a first fixing member disposed in the first fixing hole; a second fixing hole located at each pile head of the end of the spectacle frame; and a second fixing member disposed in the second fixing hole for locking the first fixing member and securing the two parts of the end of the spectacle frame together. The spectacle frame of this invention has a simple structure, is easy to assemble and be used conveniently. And the glasses may not be pressed to deform or destroy so as to easily replace the component at any time.

## Description

### Technical field of the Invention

The invention relates to a daily article, and more specifically, to a spectacle frame with innovative structure.

### Background of the Invention

Spectacles are the simple optical device used for correcting vision or protecting the eyes and comprised of lens and spectacle frame. The spectacles used for correcting vision include four categories, namely spectacles for shortsight, spectacles for farsight, spectacles for presbyopia and spectacles for astigmatism. Spectacles are not only a tool for protecting the eyes, but also are an ornamental for beautification purpose.

The spectacle frame made of the ordinary natural materials (such as horn and shell of different animals, natural timber or processed timber and so on) is more difficult for mounting the lens compared with the spectacle frames made of metal and plastic because the spectacle frames made of natural materials may be easily broken or cracked. In addition, the spectacles store usually increases the size of the lens of the customer. After the lenses are mounted, the spectacle frame will have solid feel and the lens will not easily fall off. If this mounting method is used for the spectacle frame made of natural material, the spectacle frame will have pressure soon when it cannot endure the larger lens and will crack.

For the existing technology, there are also some spectacles that improve these problems. For example, China patent application CN201080066245.4 discloses a spectacle, which comprises a mounting system used for the spectacles, and has a hinge component and at least one connecting component. The hinge component is comprised of a first part used for being fixed to the spectacle leg and a second part used for being fixed to one spectacle rim. Wherein, the first part and the second part are mutually connected via a rotating joint, and the second part has at least a first connecting position, and the first connecting position can be connected with a first fixing point in a first fixing area of the spectacle rim. In addition, it has at least a second connecting position, and the second connecting position can be connected with a second fixing point in a second fixing area of the spectacle rim. The connecting component is connected to the spectacle leg or the lateral side of the spectacle rim opposite to the hinge component, and acts together with the hinge component to fix the spectacle leg or spectacle rim. The technology only has the function of opening and closing the spectacle ring, and the system can only be used for connecting the spectacle arm, cannot open and close the hinge. Thus, the problems above cannot be solved.

Thus, it is necessary to design a new spectacle frame to solve the problems that the spectacle frame will break after being used for a long time and mounting is not convenient.

### Summary of Invention

The object of the invention is to solve the above problems, providing a new spectacle frame (made of any material) that will not bring about the risk of breaking of the spectacle frame, lens and rim after long time use. The structure of the spectacle frame is simple, which is convenient for usage, and can replace the part from time to time.

To achieve such object, the invention adopts the following technical resolution:
a spectacle frame comprising a frame body and a pair of spectacle legs, in which two pile heads of the frame body are divided to obtain two parts at the end of the frame body wherein the spectacle frame also comprises:
a first assembling hole disposed on each pile head of the end of the spectacle frame;
a first fixing hole disposed on each pile head of the end of the spectacle frame which is cross-configuration with the first assembling hole;
a first fixing member disposed in the first fixing hole;
a second fixing hole located at each pile head of the end of the spectacle frame; and
a second fixing member disposed in the second fixing hole for locking the first fixing member and securing the two parts of the end of the spectacle frame together.

According to the spectacle frame of the invention, the first assembling hole is shaped as rectangular.

According to the spectacle frame of the invention, the first fixing hole and first assembling hole are arranged in mutually cross manner, and the first fixing hole has the same depth as that of the first assembling hole.

According to the spectacle frame of the invention, the arrangement direction of the second fixing hole is same to that of the first fixing hole.

According to the spectacle frame of the invention, the first fixing member is made of metal, in which one part of the first fixing member is shaped as threaded cylindrical form, and the other part is shaped as cylindrical form.

According to the spectacle frame of the invention, the cylindrical part of the first fixing member is provided with threads.

According to the spectacle frame of the invention, the first fixing member is located in the first fixing hole, and the threads of the first fixing member are connected and fastened to the spectacle frame by a medium of epoxy resin.

According to the spectacle frame of the invention, the first fixing hole is a threaded hole, and the second fixing hole is non-threaded hole.

According to the spectacle frame of the invention, the end of the spectacle arm is provided with a non-closed circle with opening.

According to the spectacle frame of the invention, the diameter of the internal circle of the circle of the spectacle arm is smaller than the diameter of the external circle of the cylindrical part of the first fixing member.

The existing spectacle frame can be made of any material (such as natural timber, horn, shell and bone of any animal, plastic or metal material) by using the technical solution of the invention. In view of the spectacle frame that can be loosened, it can prevent the risk that the lens will break after being used for a long time.

In addition, the spectacle frame of the invention has simple structure, which can be used conveniently. It facilitates to reduce the cost of the users. Furthermore, the spectacle frame of the invention has better clamping force, which can prevent fall-off while wearing the spectacles.

### Brief Description of the Drawings

Figure 1 is a schematic view of one embodiment of the spectacle frame of the invention;
Figure 2 is a schematic view of different members of the spectacle frame of the invention;
Figure 3 is a schematic view of circular shaft of the spectacle rim of the invention;
Figure 4 is a schematic view of the screw of the invention; and
Figure 5 is a schematic view of one end of the spectacle arm of the invention.

### Detailed Description of the Invention

In the following, the preferable embodiments of the invention are illustrated in combination with the attached drawings, and the detailed technical resolution of the invention is described.

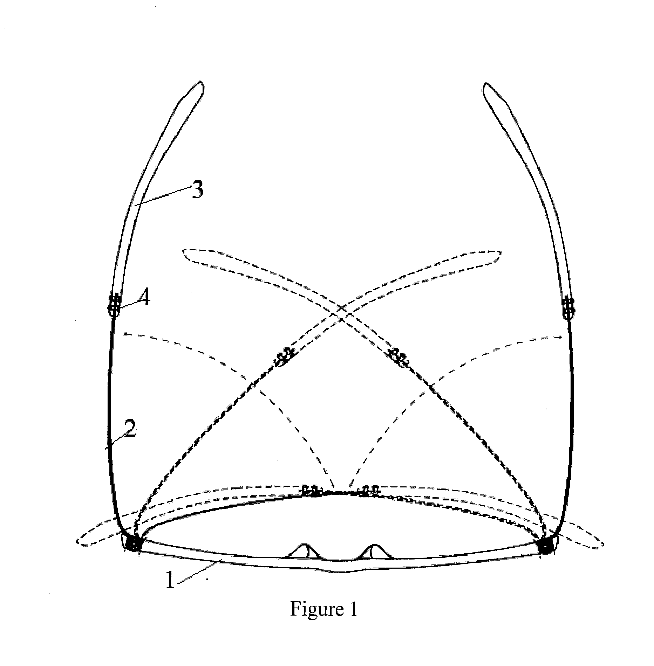

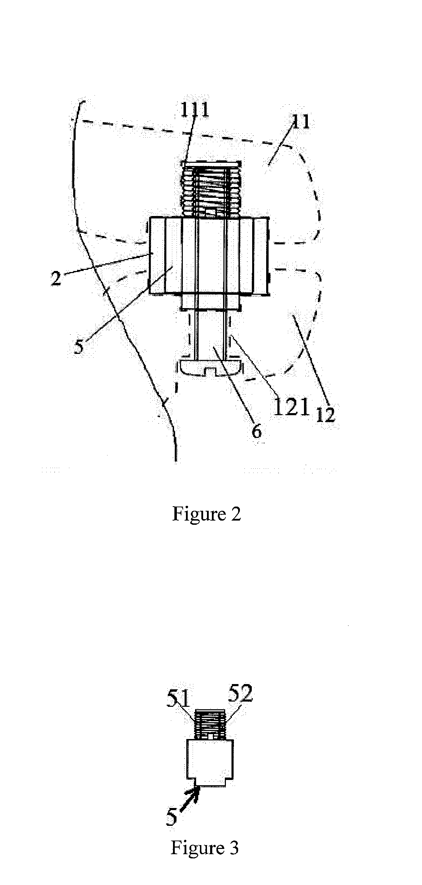

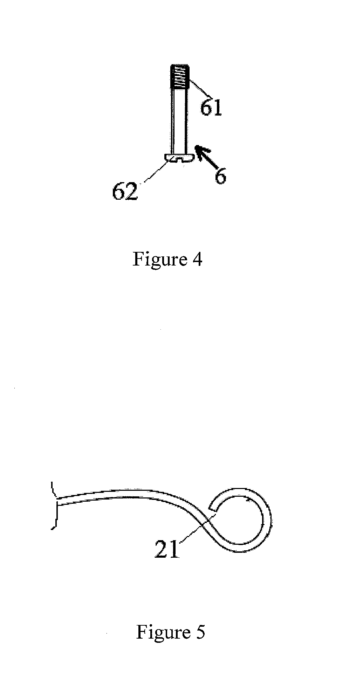

Shown as Figures 1-5, the spectacle frame of the invention comprises a spectacle rim 1 and a spectacle arm 2, and the spectacle rim 1 and the spectacle arm 2 are connected, in which he details of specific connection will be illustrated below.

Each end of the spectacle rim 1 includes a pile head, which is fully divided to obtain an upper part 11 and a lower part 12 for convenient placement of the lens. In one embodiment, the pile head can also be partially cut in order to arrange the lens into the spectacle rim 1 conveniently. The spectacle arm 2 includes a spectacle leg 3, and the spectacle arm 2 and the spectacle leg 3 are connected by a snap ring 4, by which connection would be increases, and the spectacle leg 3 will not be separated or fallen off from the spectacle arm 2.

The spectacle frame 1 also includes a first assembling hole 111 that is arranged at back sides of the two pile heads. Preferably, the first assembling hole 111 is shapes as rectangular form and is used for mounting the spectacle arm to a proper place.

The spectacle frame 1 further includes a first fixing hole located at the pile heads of two ends of the spectacle frame respectively, and the first fixing hole and the first assembling hole 111 are arranged in cross manner. For example, in one embodiment, the first fixing hole is arranged at the horizontal position, and the first assembling hole 111 is arranged at the vertical position for proper assembling of the spectacles.

The spectacle frame 1 further includes a first fixing member located in the first fixing hole. Preferably, the first fixing member is a circular shaft 5 comprising a cylindrical part and a threaded cylindrical part. Thread 51 is arranged on the threaded cylindrical part. And thread is also provided with the circular shaft 5. Hole 52 is an inner hole of the first fixing member and is a threaded hole.

The spectacle frame 1 further includes a second fixing hole 121 that is also located on the pile heads of the two ends of the spectacle frame 1 respectively, and the spectacle frame 1 further includes a second fixing member located in the second fixing hole 121. The above configuration aims at locking the first fixing member and fastening two parts of the ends of the spectacle rim together.

Preferably, in one embodiment, the second fixing member is a screw 6 including threads 61. The screw 6 is connected with the threaded hole 52. A nailhead 62 is disposed at the bottom of the screw 6. Both the diameter of the nailhead 62 and the diameter of the circular shaft 5 are larger than the diameter of the second fixing hole 121 by which both the nailhead 62 and the circular shaft 5 can be abutted against the second fixing hole 121.

In one embodiment of the invention, the depth of the first fixing hole is just the same as that of the first assembling hole 111.

In one embodiment of the spectacle frame according to this invention, the second fixing hole 121 and the first fixing hole have the same arrangement direction. Preferably, the space created by division of the pile head allows the first fixing hole to be formed from downward to upward, not penetrating the top. The second fixing hole 121 is formed from downward to upward and penetrates the lower part of the pile head of the spectacle frame.

According to the invention, the end of the spectacle arm 2 is provided with a non-closed circle 21 with opening. Preferably, the diameter of the internal circle of the circle of the spectacle arm is smaller than the diameter of the external circle of the thread 51 of the cylindrical part of the first fixing member, in view of which the lower part of the circular shaft 5 can be covered by the spectacle arm 2 conveniently to form a clamping force.

For actual assembling process, the lens is firstly mounted into the spectacle frame 1, and the circular shaft is placed at position of the pile head, then the spectacle arm 2 is mounted into the circular shaft 5 above the spectacle frame 1, and then the lower part of the spectacle frame 2 is pushed upward, and the screw 6 is placed into the second fixing hole 121 at the lower portion. Positions of different members are adjusted properly, and then screw 6 is screwed up, rendering the upper part 11 and lower part 12 of the spectacle rim being fastened. It further confirms whether the spectacle arm 2 can move smoothly or not, and the spectacle arm 2 can smoothly rotate around the circular shaft 5. After completing these steps, assembling of the entire spectacles is completed. If there is a need to replace the lens, only loosening the screw and taking out the old lens is necessary, and then repeat the steps above.

The spectacle frame of this invention has a simple structure, and is easy to assemble and be used conveniently. With the design of the entire spectacle rim, the lens will not be compressed after being used for a long time, and the lens will not break.

In addition, the lower part of the circular shaft is covered by the spectacle, by which means clamping force of the spectacle rim of the invention can be created and fall-off of the spectacles while wearing can be prevented.

These specific embodiments further make detailed description of the technical issue solved by the invention, technical resolution and beneficial effects. It is understood that these only describe the specific embodiments of the invention, and do not intend to limit the invention. Any modification, equivalent substitution or improvement and so on within the essence and principle of the invention shall be within the protection scope of the invention.

## Claims

1. A spectacle frame comprising a frame body and a pair of spectacle legs, in which two pile heads of the frame body are divided to obtain two parts at the end of the frame body wherein the spectacle frame also comprises:
a first assembling hole disposed on each pile head of the end of the spectacle frame;
a first fixing hole disposed on each pile head of the end of the spectacle frame which is cross-configuration with the first assembling hole;
a first fixing member disposed in the first fixing hole;
a second fixing hole located at each pile head of the end of the spectacle frame; and
a second fixing member disposed in the second fixing hole for locking the first fixing member and securing the two parts of the end of the spectacle frame together.

2. The spectacle frame according to Claim 1, wherein the first assembling hole is shaped as rectangular.

3. The spectacle frame according to Claim 1, wherein the first fixing hole and first assembling hole are arranged in mutually cross manner, and the first fixing hole has the same depth as that of the first assembling hole.

4. The spectacle frame according to Claim 1, wherein the arrangement direction of the second fixing hole is same to that of the first fixing hole.

5. The spectacle frame according to Claim 1, wherein the first fixing member is made of metal, in which one part of the first fixing member is shaped as threaded cylindrical form, and the other part is shaped as cylindrical form.

6. The spectacle frame according to Claim 5, wherein the cylindrical part of the first fixing member is provided with threads.

7. The spectacle frame according to Claim 5, wherein the first fixing member is located in the first fixing hole, and the threads of the first fixing member are connected and fastened to the spectacle frame by a medium of epoxy resin.

8. The spectacle frame according to Claim 1, wherein the first fixing hole is a threaded hole, and the second fixing hole is non-threaded hole.

9. The spectacle frame according to Claim 1, wherein the end of the spectacle arm is provided with a non-closed circle with opening.

10. The spectacle frame according to Claim 8, wherein the diameter of the internal circle of the circle of the spectacle arm is smaller than the diameter of the external circle of the cylindrical part of the first fixing member.
